# EUROPÄISCHE PATENTSCHRIFT

(11) **EP 2 597 764 B1**
(45) Veröffentlichungstag und Bekanntmachung des Hinweises auf die Patenterteilung: **13.04.2016**
(21) Anmeldenummer: 11190134.4
(22) Anmeldetag: 22.11.2011
(51) Int. Cl.: H02M 1/32, H02H 7/12, H02M 7/483, H02M 7/49

(54) **Verfahren zur Behandlung von Fehlern in einem modularen Multilevelumrichter sowie ein solcher Umrichter**
Method for handling failures in a modular multilevel converter and such a converter
Procédé de traitement des erreurs dans un convertisseur modulaire multiniveau et un tel convertisseur

(43) Veröffentlichungstag der Anmeldung: 29.05.2013
(73) Patentinhaber: ABB Technology AG, 8050 Zürich (CH)
(72) Erfinder: Korn, Arthur, CH-5400 Baden (CH)
(74) Vertreter: ABB Patent Attorneys

(56) Entgegenhaltungen:
- WO-A1-2011/116816
- CN-A- 102 170 110
- GEMMELL B ET AL: "Prospects of multilevel VSC technologies for power transmission", TRANSMISSION AND DISTRIBUTION CONFERENCE AND EXPOSITION, 2008. T&D. IEEE/PES, IEEE, PISCATAWAY, NJ, USA, 21. April 2008 (2008-04-21), Seiten 1-16, XP031250215, ISBN: 978-1-4244-1903-6

## Beschreibung

### Technisches Gebiet

Die Erfindung betrifft Umrichter, insbesondere modulare Multilevel-Stromrichter. Weiterhin betrifft die Erfindung Maßnahmen zum Erkennen von Fehlern in einem Umrichter.

### Stand der Technik

Umrichterschaltungen werden heutzutage im Stand der Technik in vielfältiger Weise eingesetzt. Insbesondere zum Betreiben von Antrieben weisen Direktumrichter Vorteile auf, da sie in einigen Anwendungsbereichen bei gleichem Aufwand höhere Ströme treiben können als indirekte Umrichter.

Als Direktumrichter werden insbesondere modulare Mehrpegelumrichter (engl. *= modular multilevel converter,* Abkürzungen = MMC, MMLC oder M2LC) verwendet. Derartige Umrichter weisen Umrichterzweige auf, die jede eingangsseitige Phasenleitung mit einer ausgangsseitigen Phasenleitung verbinden. Derartige Umrichter können auch als Teilumrichter eingesetzt werden, die seriell miteinander verbunden werden.

Jeder der Umrichterzweige weist eine Serienschaltung aus einer Drossel und einer oder mehreren als Zweipole ausgebildeten Schaltzellen auf. Die Schaltzellen können mit einer Halb- oder Vollbrückenschaltung aufgebaut sein und einen Energiespeicher, wie beispielsweise einen Schaltzellenkondensator, aufweisen. Durch geeignete Beschaltung kann der Umrichterzweig so geschaltet werden, dass der Energiespeicher in den Umrichterzweig geschaltet oder von diesem getrennt wird. Die Ansteuerung des Direktumrichters erfolgt in der Regel für jede Schaltzelle individuell so, dass an den Klemmen der jeweiligen Schaltzelle keine Spannung anliegt und diese lediglich einen passiven Stromfluss durch Freilaufdioden zulässt oder über den Klemmen der jeweiligen Schaltzelle die Spannung des Energiespeichers abfällt, d. h. die Spannung des Schaltzellenkondensators bei einer Halbbrückenbeschaltung oder die nicht-invertierte oder invertierte Spannung des Schaltzellenkondensators bei einer Vollbrückenbeschaltung. Direktumrichter dieser Art sind beispielsweise aus den Druckschriften WO 03/090331 oder US 2011/0075 465 A1 bekannt.

In Direktumrichtern können Fehler auftreten. Tritt ein Fehler auf, so ist in der Regel eine sofortige Reaktion notwendig, um eine Zerstörung von Bauelementen zu vermeiden.

Aus der Druckschrift US 2008/0232 145 A1 ist beispielsweise ein Mehrpegelwandler bekannt, in dem die Umrichterzweige mehrere Schaltzellen aufweisen. Tritt ein Fehler in einer der Schaltzellen auf, was beispielsweise durch einen Vergleich einer gemessenen Ausgangsspannung mit einer erwarteten Spannung erkannt werden kann, so wird die betreffende Schaltzelle überbrückt.

In der Druckschrift Maharjan, L. et al., "Fault-Tolerant Operation of a Battery-Energy-Storage System Based on a Multilevel Cascade PWM Converter with Star Configuration", IEEE Transactions on power electronics, Band 25, Nr. 9, September 2010, Seiten 2386-2396, wird vorgeschlagen, nach Erkennen eines Fehlers in einer Schaltzelle des Umrichters die Schaltzelle kurzzuschließen, so dass der Umrichter mit den übrigen Schaltzellen weiter betrieben werden kann. Fehlerhafte Schaltzellen können beispielsweise anhand von Veränderungen des Ausgangsspannungsverlaufs und/oder des Kondensatorspannungsverlaufs festgestellt werden.

Die Vollbrückenschaltungen oder Halbbrückenschaltungen in den Schaltzellen weisen in der Regel als Leistungshalbleiterbauelemente zum Schalten von elektrischen Strömen IGBTs auf. Bei IGBT-Leistungshalbleiterschaltern steigt ab einer gewissen geführten Stromstärke der Innenwiderstand sprunghaft an, was im Allgemeinen als IGBT-Entsättigung bezeichnet wird. Tritt in einem IGBT eine Entsättigung auf, so muss er umgehend ausgeschaltet werden, da die in dem IGBT umgesetzte Leistung aufgrund des aus der Widerstandserhöhung resultierenden Spannungsanstiegs die zulässige Maximalleistung schnell übersteigen kann. Beispielsweise sind IGBTs heutzutage in der Lage, das Auftreten einer Entsättigung und eine Abschaltung des Überstroms für eine vorbestimmte Zeitdauer, z. B. bis zu 10 µs, zu überstehen, wenn der Zwischenkreis keine übermäßig große Streuinduktivität aufweist. Damit nach einem Feststellen eines Auftretens einer IGBT-Entsättigung ein schnelles Abschalten erfolgen kann, wird eine dazu notwendige Schaltzellensteuereinheit zur Überwachung der Schaltzelle und zum Abschalten der IGBTs direkt in den einzelnen Schaltzellen vorgesehen. Erst nachdem eine Entsättigung durch die Schaltzellensteuereinheit erkannt und der IGBT abgeschaltet wurde, wird eine zentrale Steuereinheit über das Abschalten der betreffenden Schaltzelle informiert.

Damit die Schaltzelle schnell auf einen erkannten Fehlerfall reagieren kann, können die einzelnen Schaltzellen mit Überbrückungselementen ausgestattet sein, so dass fehlerhafte Schaltzellen zuverlässig kurzgeschlossen werden können. Als Überbrückungselemente sind Thyristorschaltungen, elektromechanische Schalter, pyrotechnische Schalter oder durchlegierende Halbleiter bekannt. Viele vorgeschlagene Überbrückungselemente können jedoch nur einmal kurzgeschlossen und nicht mehr ohne weiteres geöffnet werden.

Nun können Überströme in IGBTs, die zu einer Entsättigung führen, nicht nur durch Fehler in den Schaltzellen selbst hervorgerufen werden, sondern auch durch sonstige Fehlerfälle, die außerhalb des Stromrichters bzw. außerhalb der Schaltzellen auftreten.

So lange daher zuverlässig erkannt wird, dass der Fehler in der Schaltzelle vorliegt, in der das Überbrückungselement geschlossen wird, ist ein Öffnen des Überbrückungselements nicht erforderlich. Da jedoch bei oben beschriebenem Aufbau einer Schaltzelle fälschlicherweise auch Fehler zugeordnet werden, die außerhalb der betreffenden Schaltzelle liegen, kann es vorkommen, dass funktionstüchtige Schaltzellen überbrückt werden, die dadurch dauerhaft funktionsuntüchtig gemacht würden, da sich der Kurzschluss über der Schaltzelle nicht mit einer einfachen Maßnahme wieder aufheben lässt. Bislang wird jedoch davon ausgegangen, dass jede Schaltzelle, in der ein Fehler erkannt wird, defekt ist oder Fehler der Schaltzellen werden außerhalb der Schaltzellen erkannt und den Schaltzellen durch aufwändige Analyseverfahren zugeordnet.

In der WO 2011/116816 A1 ist ebenfalls ein Mehrpegelumrichter mit Schaltzellen angegeben, wobei zwischen zwei Schaltzelle (WO 2011/116816 A1, Fig. 5, Bezugszeichen 6a, 6b) Auslöseelement zum Kurzschließen von Schaltzellenanschlüssen (WO 2011/116816 A1, Fig. 5, Bezugszeichen 18) vorgesehen ist, wobei das Auslösesignal (triggering signal) von einer zentralen Regelungseinheit (main controller) direkt oder über eine Zellenansteuereinheit (WO 2011/116816 A1, Fig. 5, Bezugszeichen 34) mit einer Zeitverzögerung bzgl. des auftretenden Fehlers erzeugt und an das Auslöseelement geschickt wird.

In "Prospects of Multilevel VSC Technologies for Power Transmission", B. Gemmell et al, Transmission and Distribution Conference and Exposition, 2008, T&D IEEE/PES, Piscataway, NJ, USA, 20. April 2008, ist ebenfalls ein gattungsgemässer Mehrpegelumrichter mit Schaltzellen offenbart.

In der CN102170110A (&US2014/0002933A1) wird ein mehrstufiges Schutzkonzept für einen gattungsgemässen modularen Multizellenumrichter offenbart.

### Darstellung der Erfindung

Es ist daher Aufgabe der vorliegenden Erfindung, sicherzustellen, dass bei einem Direktumrichter mit Schaltzellen in modularer Aufbauweise keine der Schaltzellen aufgrund eines fälschlicherweise erkannten Fehlers innerhalb der Schaltzelle dauerhaft kurzgeschlossen wird. Diese Aufgabe wird durch das Verfahren zum Betreiben eines Umrichters gemäß Anspruch 1 sowie durch den Umrichter gemäß dem Anspruch 7 gelöst.

Weitere vorteilhafte Ausgestaltungen der vorliegenden Erfindung sind in den abhängigen Ansprüchen angegeben.

Gemäß einem ersten Aspekt ist ein Verfahren zum Betreiben eines Umrichters vorgesehen, wobei der Umrichter mehrere Brückenzweige mit einer oder mehreren in Reihe geschalteten Schaltzellen umfasst, wobei jeder Brückenzweig einen von mehreren Eingängen mit einem von mehreren Ausgängen des Umrichters verbindet,
mit folgenden Schritten:
- Überwachen einer jeden der Schaltzellen, um einen Fehlerfall festzustellen;
- bei Erkennen eines Fehlers in einer der Schaltzellen Auslösen eines der Auslöseelemente zum Kurzschließen von Schaltzellenanschlüssen, wenn auf den in der Schaltzelle erkannten Fehlerfall kein Erkennen eines Fehlerfalls in einer weiteren der Schaltzellen folgt, wobei das Erkennen des Fehlerfalls in der einen Schaltzelle an eine zentrale Überwachungseinrichtung kommuniziert wird, wobei ein Zeitgeber in der zentralen Überwachungseinrichtung gestartet wird, wobei in der zentralen Überwachungseinrichtung überprüft wird, ob vor Ablauf einer vorbestimmten Zeitdauer ein Auftreten eines Fehlerfalls in einer weiteren der Schaltzellen kommuniziert wird, wobei durch die zentrale Überwachungseinrichtung das betreffende Auslöseelement der einen Schaltzelle ausgelöst wird, wenn während der vorbestimmten Zeitdauer ein Kommunizieren eines Fehlerfalls in einer weiteren Schaltzelle unterbleibt.

Das obige Verfahren hat den Vorteil, dass keine Schaltzelle aufgrund eines zuvor erkannten Fehlers überbrückt wird, so lange die Möglichkeit besteht, dass der Fehler auch außerhalb der betreffenden Schaltzelle vorliegen könnte. Dadurch kann insbesondere vermieden werden, dass bei Einsatz von Auslöseelementen in den Schaltzellen, die eine Schaltzellen permanent kurzschließen, die betreffende Schaltzelle durch den Kurzschluss unbrauchbar gemacht wird, obwohl diese eine ordnungsgemäße Funktion aufweist.

Der obige Umrichter umfasst eine Überwachung, mit der ein festgestellter Fehlerfall in einer Schaltzelle als ein Fehler der Schaltzelle angenommen wird, wenn der Fehlerfall nur in der betreffenden Schaltzelle auftritt, während auf einen sonstigen Fehler geschlossen wird, wenn in mehreren Schaltzellen gleichzeitig oder zeitlich leicht versetzt Fehlerfälle erkannt werden. Mit anderen Worten, es wird von einer äußeren Einwirkung auf den Umrichter ausgegangen, wenn in mehreren Schaltzellen ein Fehler erkannt wird.

Es kann vorgesehen sein, dass die Schaltzellen so überwacht werden, dass eine Entsättigung eines in den Schaltzellen eingesetzten IGBTs als ein Fehlerfall in einer der Schaltzellen erkannt wird.

Weiterhin können die Schaltzellen so überwacht werden, dass eine Spannungsänderung außerhalb eines Schaltzeitfensters, während dessen einer oder mehrere Leistungshalbleiterschalter zum Schalten angesteuert werden, insbesondere eine Spannungsänderung, die über einen vorbestimmten Spannungsbetrag hinausgeht, als ein Fehlerfall in einer der Schaltzellen erkannt wird.

Gemäß einer weiteren Ausführungsform kann das Auslösen eines der Auslöseelemente zum Kurzschließen von Schaltzellenanschlüssen durchgeführt werden, wenn gleichzeitig oder zeitlich leicht versetzt zu dem in der Schaltzelle erkannten Fehlerfall innerhalb einer vorbestimmten Zeitdauer kein Fehlerfall in einer weiteren der Schaltzellen erkannt wird.

Es kann vorgesehen sein, dass das Auslösen eines der Auslöseelemente zum Kurzschließen von Schaltzellenanschlüssen erst dann durchgeführt wird, wenn das Erkennen eines Fehlerfalls in einer bestimmten der Schaltzellen, gleichzeitig oder zeitlich leicht versetzt zu dem während einer vorbestimmten Zeitdauer kein Fehlerfall in einer weiteren der Schaltzellen erkannt wird, mehrmals für die bestimmte Schaltzelle aufgetreten ist.

Weiterhin kann nach dem Erkennen eines Fehlerfalls in einer der Schaltzellen ein Ansteuern von Leistungshalbleiterschaltern der betreffenden Schaltzelle unterdrückt werden; insbesondere können die Leistungshalbleiterschalter nicht-leitend geschaltet werden.

Gemäß einer Ausführungsform können, wenn auf die Erkennung eines Fehlers in einer der Schaltzellen die Erkennung eines Fehlerfalles in einer weiteren Schaltzelle folgt, die Leistungshalbleiterschalter mehrerer oder aller Schaltzellen nicht-leitend geschaltet werden.

Gemäß einer allgemeinen, nicht erfindungsgemässen Ausführung ist eine Schaltzelle für einen Umrichter mit einer oder mehreren Halbbrückenschaltungen und mit einem Energiespeicher vorgesehen, wobei eine Überwachungseinheit vorgesehen ist,
- um die Schaltzelle zum Feststellen eines Fehlerfalls zu überwachen,
- um bei Erkennen eines Fehlerfalls eine Angabe über das Auftreten des Fehlerfalls nach extern an eine zentrale Überwachungseinrichtung bereitzustellen, und
- um ein Auslöseelement zum Kurzschließen von Schaltzellenanschlüssen auszulösen, wenn als Antwort auf eine nach extern an die zentralen Überwachungseinrichtung bereitgestellte Angabe über das Auftreten des Fehlerfalls ein Auslösesignal von der zentralen Überwachungseinrichtung empfangen wird.

Gemäß einem weiteren Aspekt ist ein Umrichter mit einer Anzahl von Eingängen und einer Anzahl von Ausgängen zum Wandeln einer Eingangsspannung in eine Ausgangsspannung vorgesehen, umfassend:
- mehrere Brückenzweige mit einer oder mehreren in Reihe geschalteten Schaltzellen, wobei jeder Brückenzweig einen der Eingänge mit einem der Ausgänge verbindet,
- jeweils eine Überwachungseinheit in jeder der Schaltzellen, die ausgebildet ist, um einen Fehlerfall festzustellen;
- jeweils ein Auslöseelement in jeder der Schaltzellen, das ausgebildet ist, um Schaltzellenanschlüsse kurzzuschließen;
- eine zentrale Überwachungseinrichtung, die mit jeder der Überwachungseinheiten in Kommunikationsverbindung steht und die ausgebildet ist,
   - um eine Angabe zu einem in einer der Überwachungseinheiten erkannten Fehler zu empfangen, und
   - um das betreffende Auslöseelement der einen Schaltzelle auszulösen, wenn nach einem in einer Schaltzellen erkannten Fehlerfall während einer vorbestimmten Zeitdauer kein Fehlerfall in einer weiteren der Schaltzellen erkannt wird.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines modularen Mehrpegelumrichters;
- Figuren 2a und 2b: schematische Darstellungen der Schaltzelle zum Aufbau des modularen Mehrpegelumrichters der Figur 1;
- Figur 3: eine Darstellung zur Erkennung einer Entsättigung der IGBT-Halbleiterbauelemente in einer Schaltzelle eines Umrichters.

### Wege zur Ausführung der Erfindung

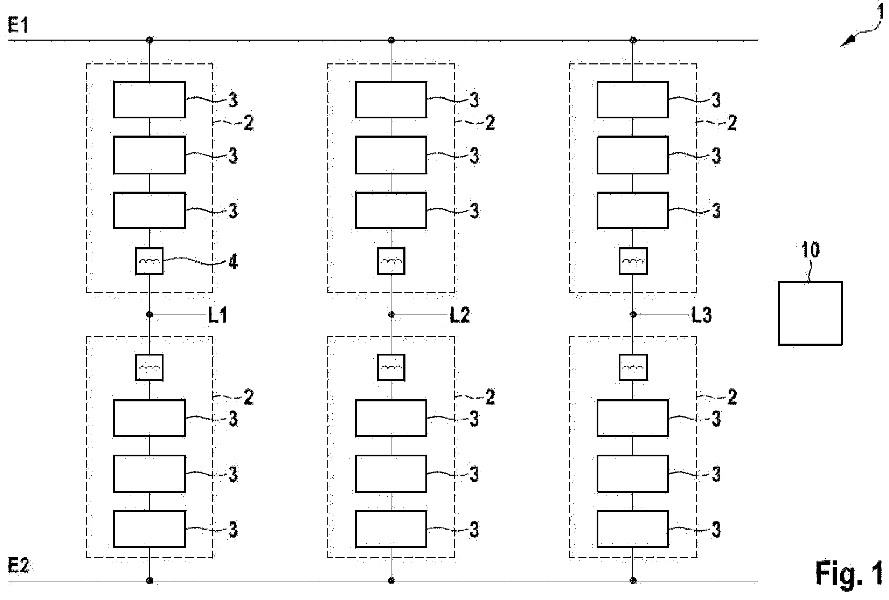

Figur 1 zeigt eine schematische Darstellung eines Umrichters 1, der in Form eines modula ren Mehrpegelumrichters (MMC, MMLC oder M2LC) ausgebildet ist. Der Umrichter 1 weist Eingangsleitungen als Eingänge E auf, im vorliegenden Ausführungsbeispiel einen ersten Eingang E1 und einen zweiten Eingang E2. Weiterhin weist der Umrichter 1 Ausgänge L auf, im vorliegenden Ausführungsbeispiel einen ersten Ausgang L1, einen zweiten Ausgang L2 und einen dritten Ausgang L3. Jeder der Eingänge E1, E2 ist über einen Brückenzweig 2 mit jedem der Ausgänge L1, L2, L3 verbunden. Die Brückenzweige 2 sind vorzugsweise gleichartig ausgebildet, es ist jedoch auch möglich, unterschiedliche Topologien der Brückenzweige 2 vorzusehen.

Der Umrichter 1 kann je nach Ansteuerung bidirektional verwendet werden, so dass der Energiefluss von den Eingängen E1, E2 zu den Ausgängen L1, L2, L3 sowie von den Ausgängen L1, L2, L3 zu den Eingängen E1, E2 gerichtet sein kann.

Jeder der Brückenzweige 2 weist eine oder mehrere seriell verschaltete Schaltzellen 3 auf. Im vorliegenden Ausführungsbeispiel weist jeder Brückenzweig 2 vier in Reihe geschalteten Schaltzelle 3 auf.

Weiterhin ist in Serie zu den in Reihe geschalteten Schaltzellen 3 jedes Brückenzweigs 2 eine Drosselspule 4 als Induktivität vorgesehen.

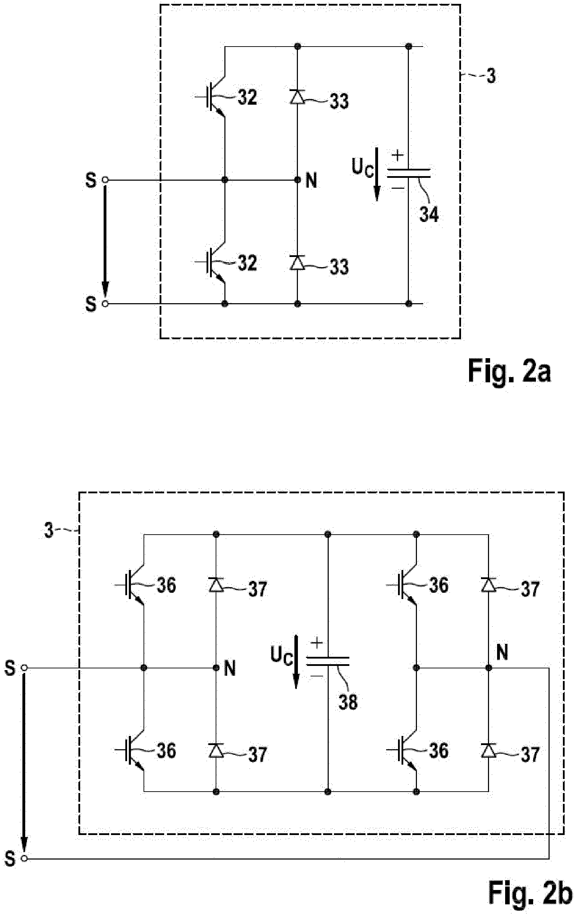

In den Figuren 2a und 2b sind Beispiele für Schaltzellen 3 dargestellt. Die Schaltzelle 3 der Figur 2a umfasst im Wesentlichen eine Halbbrückenschaltung, insbesondere nur eine Halbbrückenschaltung, mit zwei in Reihe geschalteten Leistungshalbleiterschaltern 32, die jeweils eine dazu parallel geschaltete Freilaufdiode 33 aufweisen. Die Freilaufdiode 33 kann als diskretes Bauelement oder mit dem Leistungshalbleiterschalter 32 integriert ausgeführt sein. Parallel zu der Reihenschaltung der beiden Leistungshalbleiterschalter 32 ist ein Energiespeicher 34 in Form einer Kapazität geschaltet. Die Leistungshalbleiterschalter 32 können im Allgemeinen als IGBTs, IGCTs, MOSFETs oder sonstige steuerbare Leistungstransistoren ausgebildet sein. Externe Schaltzellenanschlüsse S der Schaltzellen 3 werden an einem Knoten N zwischen den Leistungshalbleiterschaltern 32 und einem der Anschlüsse des Energiespeichers 34 vorgesehen, um die Schaltzelle 3 in dem jeweiligen Brückenzweig 2 des Umrichters 1 zu verbinden.

Bei den Leistungshalbleiterschaltern 32 wird im Wesentlichen deren Schaltfunktion, d. h. das Schließen und Öffnen einer leitenden Verbindung, genutzt. Insbesondere für Mittelspannungsanwendungen kommen in der Regel IGBTs als Leistungshalbleiterschalter 32 zum Einsatz.

In Figur 2b ist eine weitere Ausführungsform der Schaltzelle 3 dargestellt. Die Schaltzelle 3 der Figur 2b ist als H-Brückenschaltung ausgebildet und weist zwei zueinander parallel geschaltete Reihenschaltungen von Leistungshalbleiterschaltern 36 auf. Jeder der Leistungshalbleiterschalter 36 ist mit einer dazu parallel geschalteten Freilaufdiode 37 versehen, die entweder als diskretes Bauelement oder integriert mit dem Leistungshalbleiterschalter 36 ausgebildet sein kann. Die Freilaufdioden 37 sind bezüglich der Durchlassrichtung der Leistungshalbleiterschalter 36 in üblicher Weise in Sperrrichtung angeordnet.

An den Knoten N zwischen den beiden Leistungshalbleiterschaltern 36 der Reihenschaltungen werden die externen Schaltzellenanschlüsse S zum Verbinden der Schaltzelle 3 in dem jeweiligen Brückenzweig 2 des Umrichters 1 vorgesehen. Die beiden Reihenschaltungen sind zueinander und zu einem Energiespeicher 38 in Form eines Speicherkondensators parallel verschaltet.

Die Schaltzellen 3 werden durch eine Steuereinheit 10 angesteuert, um eine Eingangsspannung, entweder eine Gleich- oder eine Wechselspannung, in eine gewünschte Ausgangsspannung, entweder eine Gleich- oder eine Wechselspannung, umzuwandeln. Jede der Schaltzellen 3 kann so angesteuert werden, dass sie verschiedene Zustände annehmen kann. In einem ersten Zustand kann die Schaltzelle 3 so geschaltet werden, dass ihre Anschlüsse mit dem Energiespeicher 34, 38 verbunden werden. Auf diese Weise kann der Energiespeicher 34, 38 geladen oder entladen werden, d. h. die Ladung kann frei zu oder von dem Energiespeicher 34, 38 fließen. Weiterhin liegt im ersten Zustand die Energiespeicherspannung im Wesentlichen an den Schaltzellenanschlüssen S an, so dass sich das Spannungspotential an dem dem Brückenzweig 2 zugeordneten Ausgang durch eine Spannungsbilanz der Spannungspotenziale an dem dem Brückenzweig 2 zugeordneten Eingang und an den im entsprechenden Brückenzweig in den ersten Zustand geschalteten Schaltzellen 3 ergibt.

In einem weiteren Zustand hängt die Ausgangsspannung der Schaltzelle 3 von der Stromrichtung durch den Brückenzweig 2 ab, je nachdem, ob ein Stromfluss durch die Freilaufdioden 33, 37 zugelassen wird oder nicht. Die Schaltzelle 3 stellt dann immer eine dem durch die Schaltzelle 3 fließenden Strom entgegen gerichtete Schaltzellenspannung bereit, so dass der Energiespeicher 34, 38 Energie aufnehmen kann. Durch gesteuertes Schalten der Schaltzellen 3 in den Umrichterzweigen 2 können so für jeden Ausgang L1, L2, L3 entsprechend einer Vorgabe der ausgangsseitigen elektrischen Größen aus den Eingangsspannungen und Eingangsströmen in Verbindung mit den Energiespeicherspannungen der entsprechend geschalteten Schaltzellen 3 die gewünschten Spannungen an den Ausgängen L1, L2, L3 bzw. Phasenspannungen erzeugt werden.

Bisherige durch die Steuereinheit 10 betriebene Ansteuerverfahren für den Umrichter 1 verfolgen neben dem Bereitstellen von gewünschten Ausgangsspannungen und Ausgangsströmen auch eine Strategie, die Energiespeicher 34, 38 in den Schaltzellen 3 möglichst auf einem konstanten Energieniveau bzw. Spannungsniveau zu halten, d. h. dass die jeweils in den Energiespeichern 34, 38 gespeicherte Energie im Mittel konstant bleibt bzw. die sich über dem jeweiligen kapazitiven Energiespeicher 34, 38 einstellende Energiespeicherspannung im Wesentlichen innerhalb eines vorgegebenen Schwankungsbereichs variiert. Dabei wendet die Steuereinheit 10 eine von an sich bekannten Strategien an, durch die die kapazitiven Energiespeicher 34, 38 mit wechselnder Polarität in die Umrichterzweige 2 geschaltet werden. Dies wird im Wesentlichen dadurch erreicht, dass die Stromflüsse durch jede der Schaltzellen 3 im Wesentlichen wechselweise umgepolt bzw. entgegen der Richtung der Spannungsdifferenz über den betreffenden Brückenzweig gepolt werden, um so Zyklen von Ladung und Entladung der kapazitiven Energiespeicher 34, 38 zu bewirken.

Die Topologie des Umrichters 1, der in Figur 1 gezeigt ist, ist nur beispielhaft. Der oben gezeigte Aufbau ist in beliebiger Weise auf eine beliebige Anzahl von Eingängen E und eine beliebige Anzahl von Ausgängen L skalierbar. Wesentliche Merkmale sind, dass zwischen jedem Eingang und jedem Ausgang ein Brückenzweig 2 angeordnet ist, der aus einer oder mehreren seriell verschalteten Schaltzellen 3 aufgebaut ist.

Vorzugsweise weist jeder Brückenzweig 2 mehrere Schaltzellen 3 auf, die insbesondere für Mittelspannungsanwendungen geeignet sind, da dort die Spannungsbelastung jeder Schaltzelle 3 gegenüber den Eingangs- und Ausgangsspannungen reduziert ist.

Weiterhin weist jede der Schaltzellen 3 eine Überwachungseinheit 39 auf, die ein fehlerhaftes Verhalten detektieren kann. Beispielsweise kann insbesondere bei Verwendung von IGBT-Leistungshalbleiterschaltern eine IGBT-Entsättigung auftreten, bei der im leitenden Schaltzustand ab einer gewissen Stromstärke der Widerstand des IGBT-Leistungshalbleiterschalters sprunghaft ansteigt. Tritt eine solche Entsättigung auf, so muss der betreffende IGBT umgehend ausgeschaltet werden, um eine Zerstörung des IGBTs oder sonstiger Schaltungsteilen zu vermeiden.

Üblicherweise können IGBTs das Auftreten einer Entsättigung für eine kurze Zeitdauer von mehreren Mikrosekunden überstehen. Es ist daher notwendig, sicherzustellen, dass die Abschaltung bei Auftreten einer IGBT-Entsättigung schnell genug erfolgt. Daher wird eine Überwachungseinheit 39 in den Schaltzellen 3 vorgesehen, die die Schaltzelle hinsichtlich einer Entsättigung überwacht. Dazu kann die Überwachungseinheit 39 die an den Schaltzellenanschlüssen anliegende Spannung überwachen und einen Fehler feststellen, wenn eine Spannungsänderung bzw. eine Spannungsänderung über eine bestimmte Spannungsdifferenz außerhalb eines Zeitfensters auftritt, in dem einer oder mehrere der Leistungshalbleiterschalter geschaltet werden. Es kann vermutet werden, dass eine Änderung einer Ausgangsspannung an der Schaltzelle 3 außerhalb eines Schaltvorgangs eines oder mehrerer der Leistungshalbleiterschalter 32, 36 auftritt, wenn einer der Leistungshalbleiterschalter 32, 36 in eine Entsättigung gerät.

Jedoch ist es auch möglich, dass Fehler außerhalb der Schaltzelle 3 zu einer plötzlichen Änderung der Schaltzellenspannung bzw. zu einer IGBT-Entsättigung führen können. Dies können insbesondere Kurzschlüsse an Eingängen und/oder Ausgängen und/oder zwischen Eingängen und Ausgängen sein.

Das Kurzschließen der Schaltzellenanschlüsse S der Schaltzelle 3, in der ein Fehler festgestellt worden ist, wird herkömmlicherweise mithilfe eines Auslöseelements 41 z. B. in Form von Thyristorschaltungen, elektromechanischen Schaltern, pyrotechnischen Schaltern oder durchlegierenden Halbleiterbauelementen, bewirkt. Diesen ist gemeinsam, dass sie nicht mehr ohne weiteres geöffnet werden können, wenn nach dem Auslösen festgestellt wird, dass der in der Schaltzelle 3 erkannte Fehler fälschlicherweise als Fehler der Schaltzelle 3 interpretiert worden ist und stattdessen ein externer Fehlergrund für das Auslösen der Überwachungseinheit 39 verantwortlich ist.

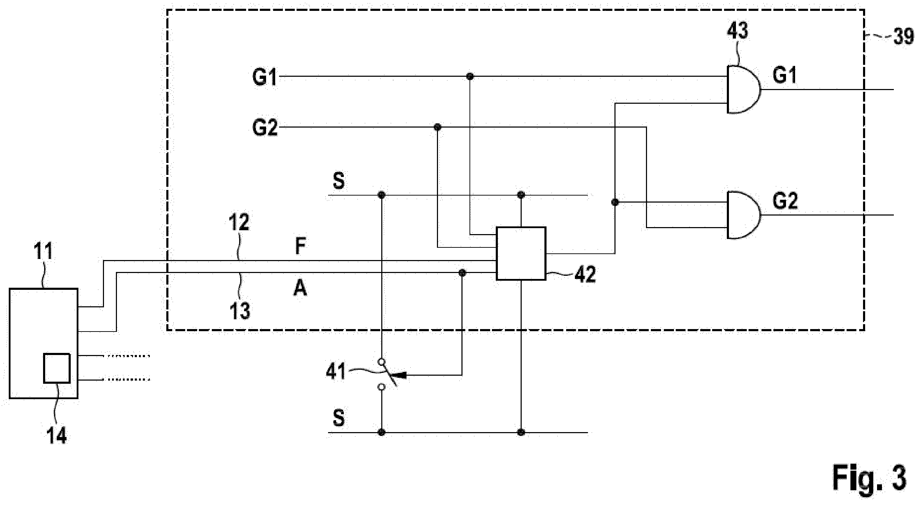

In Figur 3 sind eine Überwachungseinheit 39 einer Schaltzelle 3 und eine Überwachungseinrichtung 11, die in der zentralen Steuereinheit 10 angeordnet sein kann, ausführlicher dargestellt. Die Überwachungseinrichtung 11 steht mit den Überwachungseinheiten 39 mehrerer Schaltzellen 3 vorzugsweise mit den Überwachungseinheiten 39 jeder der Schaltzellen 3 in Kommunikationsverbindung und ist in der Lage, ein Fehlersignal über einen Fehlersignalkanal 12 zu erhalten und ein Auslösesignal über einen Auslösesignalkanal 13 an das Auslöseelement 41 der Überwachungseinheit 40 einer adressierten Schaltzelle 3 zu übertragen, um ein Auslösen des Auslöseelements 41 zu bewirken bzw. ein Kurzschließen der Schaltzellenanschlüsse S der betreffenden Schaltzelle 3 zu erreichen.

Das Fehlersignal und das Auslösesignal können gemeinsam mit einer Vielzahl anderer Steuer- und Benachrichtigungssignalen über eine elektrische oder optische digitale Kommunikationsverbindung übermittelt werden.

Die Überwachungseinheit 39 weist eine Spannungsdetektionseinheit 42 auf, die die Spannung an den Ausgangsleitungen der Schaltzelle 3 überwacht. Die Spannungsdetektionseinheit 42 gibt eine logische "1" an erste Anschlüsse von Und-Gattern 43 aus, die für jedes der Steuersignale G1, G2 vorgesehen sind. An zweiten Anschlüssen der Und-Gatter 43 sind die Steuersignale G1, G2 zum Ansteuern der Leistungshalbleiterschalter 32, 36 durch die Steuereinheit 10 angelegt. Die Spannungsdetektionseinheit 42 empfängt weiterhin die Steuersignale G1, G2 aus der Steuereinheit 10 und maskiert die Spannungsdetektion, so dass eine Spannungsdetektion innerhalb eines Schaltzeitfensters, während dessen ein Schalten der IGBTs erfolgt, unterbunden wird. Die Spannungsdetektionseinheit 42 erkennt während der Zeiträume, während derer die Leistungshalbleiterschalter 32, 36 innerhalb der betreffenden Schaltzelle 3 nicht geschaltet werden oder sich in einem Schaltzeitfenster befinden, eine Änderung der Spannung, die beispielsweise aufgrund eines Fehlers entweder innerhalb der betreffenden Schaltzelle 3 oder aufgrund einer externen Fehlerursache aufgetreten ist.

Wird eine Spannungsänderung, insbesondere eine Spannungsänderung, die über eine vorbestimmte betragsmäßige Spannungsänderung hinausgeht, außerhalb der Schaltzeitfenster der Leistungshalbleiterschalter 32, 36 festgestellt, so generiert die Spannungsdetektionseinheit 42 eine logische "0", die jeweils an die ersten Eingänge der Und-Gatter 43 angelegt wird. Dadurch werden die Steuersignale G1, G2 blockiert und an die Leistungshalbleiterschalter 32, 36 der betreffenden Schaltzelle 3 wird eine logische "0" angelegt, wodurch diese abgeschaltet, d. h. nicht-leitend, geschaltet wird.

Gleichzeitig wird ein Fehlersignal über den Fehlersignalkanal 12 an die zentrale Überwachungseinrichtung 11 gesendet. Dort wird mit dem Empfang des ersten Fehlersignals F ein Zeitgeber 14 gestartet und es wird überwacht, ob während einer vorbestimmten Zeitdauer ein weiteres Fehlersignal F von einer weiteren Schaltzelle 3 eingeht. Geht ein weiteres Fehlersignal F von einer weiteren der Schaltzellen 3 ein, so wird auf einen externen Fehler geschlossen und die Steuereinheit 10 wird angewiesen, den Umrichter 1 in einen sicheren Zustand zu bringen, insbesondere durch Ausschalten aller Leistungshalbleiterschalter 32, 36 in den Schaltzellen 3 durch Bereitstellen von geeigneten Steuersignalen G1, G2. In diesem Fall wird kein Auslösesignal A übermittelt, das angibt, dass das Auslöseelement 41 auslösen soll.

Wird während der vorbestimmten Zeitdauer nach dem erstmaligen Empfang des Fehlersignals F von einer der übrigen Schaltzellen 3 kein weiteres Fehlersignal empfangen, so kann davon ausgegangen werden, dass die Schaltzelle 3, deren Überwachungseinheit 39 das Fehlersignal F übermittelt hat, eine Fehlfunktion aufweist, und es wird das Auslösesignal A an die Auslöseeinheit 41 der betreffenden Schaltzelle 3 gesendet, das die Schaltzellenanschlüsse S der betreffenden Schaltzelle 3 kurzschließt.

Wird stattdessen während der vorbestimmten Zeitdauer nach dem erstmaligen Empfang des Fehlersignals F von einer der weiteren Schaltzellen 3 ein Fehlersignal empfangen, so kann davon ausgegangen werden, dass die Fehlfunktion außerhalb der Schaltzelle 3 liegt, die das erste Fehlersignal gesendet hat. In diesem Fall können als Reaktion die Leistungshalbleiterschalter 32, 36 der Schaltzelle 3, die das erste Fehlersignal gesendet hat, mehrerer der Schaltzellen 3 oder aller Schaltzellen 3 nicht-leitend geschaltet werden

Gemäß einer allgemeinen, nicht erfindungsgemässen Ausführungsform kann nach einem erstmaligen Empfangen des Fehlersignals F von einer der Schaltzellen, ohne dass innerhalb der vorbestimmten Zeitdauer ein weiteres Fehlersignal empfangen wird, vorgesehen sein, dass zunächst über eine geeignete Kommunikationsverbindung (nicht gezeigt) die Spannungsdetektionseinheit 42 zurückgesetzt wird, so dass die Steuersignale G1, G2 wieder an die Leistungshalbleiterschalter 32, 36 der betreffenden Schaltzelle 3 angelegt werden, um so die Schaltzelle 3 nochmals in einen normalen Betrieb zurückzuversetzen. Dadurch kann vermieden werden, dass flüchtige Störungen, die nur einmalig oder wenige Male auftreten, zu einem vollständigen Abschalten der betreffenden Schaltzelle 3 führen. Erst wenn der einmalige Fehler in der Schaltzelle 3, die das Fehlersignal F generiert hat, erneut oder in einer vorbestimmten Anzahl durch die Überwachungseinheit 39 der betreffenden Schaltzelle 3 festgestellt wurde, kann das Auslösesignal A an das Auslöseelement 41 der betreffenden Schaltzelle 3 übermittelt werden.

### Bezugszeichenliste

- 1: Umrichter
- 2: Umrichterzweig
- 3: Schaltzelle
- 4: Drosselspule
- 10: Steuereinheit
- 11: zentrale Überwachungseinrichtung
- 12: Fehlersignalkanal
- 13: Auslösesignalkanal
- 32, 36: Leistungshalbleiterschalter
- 33, 37: Freilaufdioden
- 34, 38: Energiespeicher
- 39: Überwachungseinheit
- 41: Auslöseeinheit
- 42: Spannungsdetektionseinheit
- 43: Und-Gatter

## Patentansprüche

1. Verfahren zum Betreiben eines Umrichters (1), wobei der Umrichter (1) mehrere Brückenzweige (2) mit einer oder mehreren in Reihe geschalteten Schaltzellen (3) umfasst, wobei jeder Brückenzweig (2) einen von mehreren Eingängen mit einem von mehreren Ausgängen des Umrichters (1) verbindet,
mit folgenden Schritten:
- Überwachen einer jeden der Schaltzellen (3), um einen Fehlerfall festzustellen;
- bei Erkennen eines Fehlers in einer der Schaltzellen (3), Auslösen eines der Auslöseelemente (41) zum Kurzschließen von Schaltzellenanschlüssen, wenn auf den in der Schaltzelle (3) erkannten Fehlerfall, innerhalb einer vorbestimmten Zeitdauer kein Erkennen eines Fehlerfalls in einer weiteren der Schaltzellen (3) folgt, wobei das Erkennen des Fehlerfalls in der einen Schaltzelle (3) an eine zentrale Überwachungseinrichtung (11) kommuniziert wird, wobei ein Zeitgeber in der zentralen Überwachungseinrichtung (11) gestartet wird, wobei in der zentralen Überwachungseinrichtung (11) überprüft wird, ob vor Ablauf einer vorbestimmten Zeitdauer ein Auftreten eines Fehlerfalls in einer weiteren der Schaltzellen (3) kommuniziert wird, wobei durch die zentrale Überwachungseinrichtung (11) das betreffende Auslöseelement der einen Schaltzelle (3) ausgelöst wird, wenn während der vorbestimmten Zeitdauer ein Kommunizieren eines Fehlerfalls in einer weiteren Schaltzellen (3) unterbleibt.

2. Verfahren nach Anspruch 1, wobei die Schaltzellen (3) so überwacht werden, dass eine Entsättigung eines in den Schaltzellen (3) eingesetzten IGBTs außerhalb eines Schaltzeitfensters, während dessen einer oder mehrere Leistungshalbleiterschalter (32, 36) zum Schalten angesteuert werden, als ein Fehlerfall in einer der Schaltzellen (3) erkannt wird

3. Verfahren nach Anspruch 1 oder 2, wobei die Schaltzellen (3) so überwacht werden, dass eine Spannungsänderung außerhalb eines Schaltzeitfensters, während dessen einer oder mehrere Leistungshalbleiterschalter (32, 36) zum Schalten angesteuert werden, insbesondere eine Spannungsänderung, die über einen vorbestimmten Spannungsbetrag hinausgeht, als ein Fehlerfall in einer der Schaltzellen (3) erkannt wird.

4. Verfahren nach einem der Ansprüche 1 bis 3, wobei das Auslösen eines der Auslöseelemente (41) zum Kurzschließen von Schaltzellenanschlüssen erst durchgeführt wird, wenn das Erkennen eines Fehlerfalls in einer bestimmten der Schaltzellen (3), auf das während einer vorbestimmten Zeitdauer kein Erkennen eines Fehlerfalls in einer weiteren der Schaltzellen (3) folgt, mehrmals für die bestimmte Schaltzelle (3) aufgetreten ist.

5. Verfahren nach einem der Ansprüche 1 bis 4, wobei nach dem Erkennen eines Fehlerfalls in einer der Schaltzellen (3) ein Ansteuern von Leistungshalbleiterschaltern (32, 36) der betreffenden Schaltzelle (3) unterdrückt wird, insbesondere die Leistungshalbleiterschalter (32, 36) nicht-leitend geschaltet werden.

6. Verfahren nach einem der Ansprüche 1 bis 5, wobei, wenn auf die Erkennung eines Fehlers in einer der Schaltzellen (3) die Erkennung eines Fehlerfalles in einer weiteren Schaltzelle (3) folgt, die Leistungshalbleiterschalter (32, 36) mehrerer oder aller Schaltzellen (3) nicht-leitend geschaltet werden.

7. Umrichter (1) mit einer Anzahl von Eingängen und einer Anzahl von Ausgängen zum Wandeln einer Eingangsspannung in eine Ausgangsspannung umfassend:
- mehrere Brückenzweige (2) mit einer oder mehreren in Reihe geschalteten Schaltzellen (3), wobei jeder Brückenzweig einen der Eingänge mit einem der Ausgänge verbindet,
- jeweils eine Überwachungseinheit (39) in jeder der Schaltzellen (3), die ausgebildet ist, um einen Fehlerfall festzustellen;
- jeweils eine Auslöseelement (41) in jeder der Schaltzellen (3), das ausgebildet ist, um Schaltzellenanschlüsse kurzzuschließen;
- und eine zentrale Überwachungseinrichtung (11), die mit jeder der Überwachungseinheiten (39) in Kommunikationsverbindung steht
**dadurch gekennzeichnet, dass** die zentrale Überwachungseinheit ausgebildet ist,
• um eine Angabe zu einem in einer der Überwachungseinheiten (39) erkannten Fehler zu empfangen, und
• um das betreffende Auslöseelement (41) der einen Schaltzelle (3) auszulösen, wenn nach einem in einer Schaltzelle (3) erkannten Fehlerfall während einer vorbestimmten Zeitdauer kein Fehlerfall in einer weiteren der Schaltzellen (3) erkannt wird.

## Claims

1. Method for operating a converter (1), wherein the converter (1) comprises a plurality of bridge branches (2) having one or more switching cells (3) connected in series, wherein each bridge branch (2) connects one of a plurality of inputs to one of a plurality of outputs of the converter (1),
having the following steps:
- each of the switching cells (3) is monitored in order to determine a fault;
- if a fault is identified in one of the switching cells (3), one of the triggering elements (41) for short-circuiting switching cell connections is triggered if the fault identified in the switching cell (3) is not followed by identification of a fault in a further one of the switching cells (3), within a predetermined period of time, wherein the identification of the fault in the one switching cell (3) is communicated to a central monitoring device (11), wherein a timer in the central monitoring device (11) is started, wherein a check is carried out in the central monitoring device (11) in order to determine whether occurrence of a fault in a further one of the switching cells (3) is communicated before the expiry of a predetermined period of time, wherein the central monitoring device (11) triggers the relevant triggering element of the one switching cell (3) if a fault in a further switching cell (3) is not communicated during the predetermined period of time.

2. Method according to Claim 1, wherein the switching cells (3) are monitored in such a manner that desaturation of an IGBT used in the switching cells (3) outside a switching time window, during which one or more power semiconductor switches (32, 36) are driven to switch, is identified as a fault in one of the switching cells (3).

3. Method according to Claim 1 or 2, wherein the switching cells (3) are monitored in such a manner that a voltage change outside a switching time window, during which one or more power semiconductor switches (32, 36) are driven to switch, in particular a voltage change which exceeds a predetermined voltage magnitude, is identified as a fault in one of the switching cells (3).

4. Method according to one of Claims 1 to 3, wherein one of the triggering elements (41) for short-circuiting switching cell connections is triggered only if the identification of a fault in a particular one of the switching cells (3), which is not followed by identification of a fault in a further one of the switching cells (3) during a predetermined period of time, has repeatedly occurred for the particular switching cell (3).

5. Method according to one of Claims 1 to 4, wherein, after a fault has been identified in one of the switching cells (3), driving of power semiconductor switches (32, 36) of the relevant switching cell (3) is suppressed, in particular the power semiconductor switches (32, 36) are switched off.

6. Method according to one of Claims 1 to 5, wherein, if the identification of a fault in one of the switching cells (3) is followed by the identification of a fault in a further switching cell (3), the power semiconductor switches (32, 36) of a plurality of or all switching cells (3) are switched off.

7. Converter (1) having a number of inputs and a number of outputs for converting an input voltage into an output voltage, comprising:
- a plurality of bridge branches (2) having one or more switching cells (3) connected in series, wherein each bridge branch connects one of the inputs to one of the outputs,
- a respective monitoring unit (39) in each of the switching cells (3) which is designed to determine a fault;
- a respective triggering element (41) in each of the switching cells (3) which is designed to short-circuit switching cell connections;
- and a central monitoring device (11) which has a communication link to each of the monitoring units (39), **characterized in that** the central monitoring unit is designed
• to receive an indication of a fault identified in one of the monitoring units (39), and
• to trigger the relevant triggering element (41) of the one switching cell (3), if a fault in a further one of the switching cells (3) is not identified during a predetermined period of time after a fault has been identified in one switching cell (3).

## Revendications

1. Procédé de mise en fonctionnement d'un convertisseur (1), dans lequel le convertisseur (1) comprend une pluralité de branches de ponts (2) ayant une ou plusieurs cellules de commutation (3) connectées en série, dans lequel chaque branche de pont (2) connecte l'une de plusieurs entrées à l'une de plusieurs sorties du convertisseur (1),
comportant les étapes consistant à :
- surveiller l'une, respective, des cellules de commutation (3) afin de constater un cas de défaut ;
- lors de la détection d'un défaut dans l'une des cellules de commutation (3), déclencher un élément déclencheur (41) afin de court-circuiter des bornes de cellules de commutation lorsque, lors d'un cas de défaut détecté dans la cellule de commutation (3) au cours d'une période de temps prédéterminée, aucune détection d'un cas de défaut ne se produit ensuite dans une autre des cellules de commutation (3), dans lequel la détection du cas de défaut dans ladite cellule de commutation (3) est communiquée à un dispositif de surveillance central (11), dans lequel une temporisation contenue dans le dispositif de surveillance central (11) est déclenchée, dans lequel il est vérifié, dans le dispositif de surveillance central (11) si une apparition d'un cas de défaut dans une autre des cellules de commutation (3) a été communiquée avant l'écoulement d'une période de temps prédéterminée, dans lequel l'élément de déclenchement concerné de ladite cellule de commutation (3) est déclenché par le dispositif de surveillance central (11) lorsqu'une communication d'un cas de défaut ne se produit pas dans une autre cellule de commutation (3) pendant la période de temps prédéterminée.

2. Procédé selon la revendication 1, dans lequel les cellules de commutation (3) sont surveillées de manière à ce qu'une désaturation d'un transistor IGBT utilisé dans les cellules de commutation (3) soit détectée en tant que cas de défaut dans l'une des cellules de commutation (3) à l'extérieur d'une fenêtre de commutation pendant laquelle un ou plusieurs commutateurs à semi-conducteurs de puissance (32, 36) sont commandés de manière à être passants.

3. Procédé selon la revendication 1 ou 2, dans lequel les cellules de commutation (3) sont surveillées de manière à ce qu'une variation de tension soit détectée en tant que cas de défaut dans l'une des cellules de commutation (3) à l'extérieur d'une fenêtre de commutation pendant laquelle un ou plusieurs commutateurs à semi-conducteurs de puissance (32, 36) sont commandés de manière à être commutés, notamment une variation de tension qui dépasse une valeur de tension prédéterminée.

4. Procédé selon l'une quelconque des revendications 1 à 3, dans lequel le déclenchement de l'un des éléments déclencheurs (41) pour court-circuiter des bornes de cellules de commutation n'est effectué que lorsque la détection d'un cas de défaut dans l'une, déterminée, des cellules de commutation (3), qui n'est suivie d'aucune détection d'un cas de défaut dans une autre des cellules de commutation (3) pendant une période de temps prédéterminée, s'est produite plusieurs fois pour la cellule de commutation (3) déterminée.

5. Procédé selon l'une quelconque des revendications 1 à 4, dans lequel, après la détection d'un cas de défaut dans l'une des cellules de commutation (3), une commande de commutateurs à semi-conducteurs de puissance (32, 36) de la cellule de commutation concernée (3) est supprimée, et plus particulièrement, les commutateurs à semi-conducteurs de puissance (32, 36) sont commutés à l'état non passant.

6. Procédé selon l'une quelconque des revendications 1 à 5, dans lequel, lorsque la détection d'un cas de défaut dans une autre cellule de commutation (3) fait suite à la détection d'un défaut dans l'une des cellules de commutation (3), les commutateurs à semi-conducteurs de puissance (32, 36) de plusieurs ou de la totalité des cellules de commutation (3) sont commutés à l'état non passant.

7. Convertisseur (1) comportant un certain nombre d'entrées et un certain nombre de sorties pour convertir une tension d'entrée en une tension de sortie, comprenant :
- plusieurs branches de ponts (2) comportant une ou plusieurs cellules de commutation (3) connectées en série, dans lequel chaque branche de pont connecte l'une des entrées à l'une des sorties,
- une unité de surveillance (39) respective dans chacune des cellules de commutation (3), qui est conçue pour constater un cas de défaut ;
- un élément déclencheur (41) respectif dans chacune des cellules de commutation (3) qui est conçu pour court-circuiter des bornes de cellules de commutation ;
- et un dispositif de surveillance centralisé (11) qui est en liaison de communication avec chacune des unités de surveillance (39), **caractérisé en ce que** l'unité de surveillance centralisé est conçue
- pour recevoir une indication d'un défaut détecté dans l'une des unités de surveillance (39), et
- pour déclencher l'élément déclencheur (41) concerné de ladite cellule de commutation (3) lorsqu'aucun cas de défaut n'est détecté dans une autre des cellules de commutation (3) après un cas de défaut détecté dans une cellule de commutation (3) pendant une période de temps prédéterminée.
